Europäisches Patentamt

European Patent Office

Office européen des brevets

(11) Veröffentlichungsnummer: **0 418 200 A1**

# EUROPÄISCHE PATENTANMELDUNG

(21) Anmeldenummer: **90810679.2**

(22) Anmeldetag: **07.09.90**

(51) Int. Cl.5: **F16C 29/02, H02N 15/00**

(30) Priorität: **11.09.89 CH 3302/89**

(43) Veröffentlichungstag der Anmeldung:
**20.03.91 Patentblatt 91/12**

(84) Benannte Vertragsstaaten:
**AT BE CH DE DK ES FR GB GR IT LI LU NL SE**

(71) Anmelder: **Weber, Hans Rudolf**
**10, chemin du Grillon**
**CH-1007 Lausanne(CH)**

(72) Erfinder: **Weber, Hans Rudolf**
**10, chemin du Grillon**
**CH-1007 Lausanne(CH)**

(74) Vertreter: **Gasser, François W.**
**Laupenstrasse 8 Postfach 6262**
**CH-3001 Bern(CH)**

(54) **Linearführung.**

(57) Längsführungen, wie sie beispielsweise bei Schiebelehren verwendet werden, müssen hohen Anforderung an Geradheit und Steifheit genügen. Um eine hohe Messgenauigkeit zu garantieren muss der Schieber (44) spielfrei und mit konstantem Verschiebewiderstand dem Stab (41) entlanggeführt werden können. Herkömmlicherweise sind Führungsbahnen an gegenüberliegenden Flächen angeordnet, was aufgrund der Anforderungen an deren Parallelität einen hohen Fertigungsaufwand bedingt. Gegenstand der Erfindung ist eine Schieberführung, die keine parallele Führungsbahnen benötigt und daher einen geringen Bearbeitungsaufwand erfordert und hochpräzise und spielfrei ist. Sie beinhaltet einerseits einen vorteilhafterweise zumindest teilweise aus Keramik bestehenden Stab (41) und andererseits einen Schieber (44), der durch zwei Gleitflächen in einem Winkel zueinander stehende Flächen geführt ist. Der Stab enthält Führungsbahnen und ferromagnetische Schienen (42) und der Schieber Permanentmagnete (47) die mit den Schienen zusammenwirken. Dadurch wird der Schieber durch Magnetkraft auf dem Stab gehalten und kann mit konstanter Verschiebekraft über die gesamte Stablänge spielfrei verschoben werden.

*Fig.9a*

*Fig.9b*

EP 0 418 200 A1

# LINEARFÜHRUNG

Die vorliegende Erfindung betrifft eine Linearführung gemäss dem Oberbegriff des Patentanspruches 1.

In vielen Zweigen der Technik ist es notwendig, Bauteile entlang einer geraden Linie, also linear, zu verschieben. In vielen Fällen ist es ausserdem notwendig, dass die Verschiebungskraft so klein wie möglich und die Abweichung von der theoretischen geraden Linie minimal sind. In vielen Fällen ist es auch notwendig, dass senkrecht zu der Verschiebungsrichtung grosse Kräfte aufgenommen werden können.

Üblicherweise werden für derartige Linearführungen prismatische Gleitführungen mit darauf verschiebbaren Schlitten sowohl für horizontalen als auch vertikalen Betrieb eingesetzt. Sie können sehr genau und spielfrei hergestellt werden, erfordern jedoch hohe Verschiebungskräfte für die Schlitten. Bei horizontaler Verschiebung kann das Gewicht des Schlittens durch Rollen unterstützt werden, um den Verschiebungswiderstand zu verringern. Längsführungen mit Rollen oder Kugeln auf prismatischen Körpern sind zwar leichtgängig, haben aber den Nachteil, dass die Rollen umlaufen, also wieder an ihren respektiven Ausgangspunkt zurücktransportiert werden müssen, was nicht ohne zusätzlichen Kraftaufwand geschehen kann. Dieser Nachteil wird üblicherweise dadurch umgangen, dass Kugellager verwendet werden, die auf prismatischen Körpern abrollen.

In vielen Fällen kann der bewegliche Schlitten nicht durch sein Gewicht auf die prismatische Führung gepresst werden, sondern muss durch weitere Elemente, die Kräfte erzeugen, die im Betrag mindestens den im Betrieb auftretenden entsprechen und in der Richtung entgegengesetzt sind, auf dieser gehalten werden. Durch diese Tatsache werden an die Parallelität oder die Zylindrizität einer prismatischen Führung hohe Anforderungen gestellt. Diese zusätzlichen Elemente haben zwar keinen Einfluss auf die Linearität der Führung, erhöhen jedoch den Verschiebungswiderstand und die Masse des Schlittens. In vielen Anwendungen, beispielsweise bei transportablen Instrumenten und in Fällen wo eine gute Dynamik erforderlich ist, müssen aber die Massen sowohl des Schlittens als auch der linearen Führung so niedrig wie möglich gehalten werden. Allen rollenden Bewegungen gemeinsam ist, dass hohe Anforderungen an die Rundheit der Rollkörper, sowie an die Geradheit der Linie oder die Ebenheit der Fläche, auf welcher sie abrollen, gestellt werden. Unrundheiten bewirken oft nicht repetitive Taumelfehler des Schlittens auf seiner Führung.

Höhere Genauigkeiten werden mit Luftlagern erreicht, bei welchen Luft dosiert zwischen sich gegenseitig verschiebenden Flächen geblasen wird, sodass nur noch die Viskosität der Luft den Gleitwiderstand bestimmt. Es ist bei derartigen Lagern unumgänglich, dass sich die beiden Flächen um einen bestimmten Betrag voneinander abheben. Solche Lager können in ihrer Wirkrichtung (senkrecht zu der Fläche) hohe Kräfte aufnehmen. Eine wichtige Konstante ist die Steifigkeit, d.h. die Kraft senkrecht zur Lagerfläche dividiert durch die Abstandsänderung zwischen beiden Flächen. Um einerseits die Steifigkeit zu erhöhen, und anderseits im Stillstand eine gute Adhäsion beider Flächen zu erhalten, wird ein Teil der Lagerfläche üblicherweise mit einem Unterdruck beaufschlagt. Die Aufrechterhaltung des Unterdruckes erfordert aber auch im Stillstand eine Energiezufuhr.

Eine magnetische Vorrichtung zum Festhalten und Verschieben zweier Teile an bzw. relativ zueinander, die mindestens einen Magneten und Mittel zum Regeln des Abstandes der Polschuhe enthält, ist aus CH-A-415 188 bekannt. Sie weist den Nachteil auf, dass zu ihrer Funktion Gas oder Flüssigkeit unter Druck zwischen die beweglichen Teile gepresst werden muss, derart, dass diese keinen mechanischen Kontakt zueinander haben. Dies bedingt die Betätigung einer Pumpe mit dauernder Energiezufuhr und bewirkt Massdifferenzen zwischen Stillstand und Verschiebung des beweglichen Teiles.

Der vorliegenden Erfindung liegt die Aufgabe zugrunde, die Nachteile der herkömmlichen Längsführungen zu überwinden und eine Linearführung zu schaffen, die von hoher Genauigkeit ist, die mit kleiner beweglicher sowie kleiner gesamter Masse behaftet ist und die zumindest im Stillstand keine Energie verbraucht und die einfach und wirtschaftlich hergestellt werden kann.

Erfindungsgemäss wird diese Aufgabe durch eine Längsführung gelöst, wie sie im Patentanspruch 1 definiert ist.

Die Erfindung macht sich die hervorragenden Eigenschaften neuer Materialien zunutze, nämlich einerseits von Keramik- und anderseits von Permanentmagnetwerkstoffen. Unter den Begriff Keramik fallen Werkstoffe, deren physikalische Eigenschaften zum Teil in weiten Grenzen verschieden sein können. Allgemein handelt es sich bei Keramiken um harte und spröde Materialien. Im Zusammenhang mit der Erfindung interessieren vor allem die hohe Steifigkeit und niedrige Dichte, die hohe Verschleissfestigkeit sowie Mass-und Formstabilität auf lange Zeit. Innere Spannungen, wie sie bei den bisher üblichen Werkstoffen vorhanden sind, treten nicht auf. Da der lineare thermische Ausdehnungskoeffizient dieser Werkstoffe nur halb so hoch ist wie derjenige von Stahl und deren Wärmeleitfähigkeit besser ist als bei diesem, können sich lokale Temperaturänderungen, wie sie beispielsweise durch Handwärme erzeugt werden, weniger stark auswirken. Das Verhältnis von Steifigkeit zu Gewicht, oder Elastizitätsmodul zu Dichte ist mindestens drei mal höher als dasjenige von Stahl, die Verschleissfestigkeit ist zwanzig mal höher. Ausserdem ist es vorteilhaft, dass keramische Werkstoffe korrosionsfest sind und keine Feuchtigkeit aufnehmen. Sie können gefräst, geschliffen und hochgenau geläppt werden. Unter den heute verfügbaren Keramikwerkstoffen sind Aluminiumoxyd, Siliziumkarbid, Siliziumnitrid, Zirkonoxyd, Titandiborid, Borkarbid, Aluminiumnitrid, Whiskerverstärkte Oxyde, Mischungen davon sowie weitere und unter Markennamen erhältliche keramische Werkstoffe zu finden. Wichtig für die Erfindung ist, dass der in Frage kommende Werkstoff nichtmagnetisch ist und demzufolge ein Magnetfeld in keiner Art und Weise beeinflusst.

Permanentmagnete sind in der Lage, ein Magnetfeld dauernd ohne äussere Energiezufuhr aufrecht zu erhalten. Dieses Vermögen ist umso ausgeprägter, je höher die Koerzitivfeldstärke ist. Die neuen Magnetwerkstoffe bringen eine bedeutende Gewicht-und Volumenreduzierung wegen ihrer hohen Energiedichte. Verglichen mit einem Magneten aus AlNiCo reduziert sich das Volumen eines NdFeB Magneten um einen Faktor sechzig, um in gleichem Abstand ein gleiches Feld zu erzeugen. Dank der hohen Koerzitivfeldstärke besteht keine Gefahr der Entmagnetisierung, wodurch auch eine zeitliche Konstanz der magnetischen Werte gewährleistet ist. Die Curie-Temperatur liegt mit 300°C wesentlich über der normalen Betriebstemperatur technischer Längsführungen.

In Anwendungen, da eine möglichst hohe Haftkraft erwünscht ist, muss der Magnetkreis optimal dimensioniert sein und der oder die Luftspalte klein gemacht werden. Ein geschlossener Magnetkreis hat überdies den Vorteil eines viel kleineren Streufeldes nach aussen. In Fällen, da auch restliche Streufelder sich störend auswirken, können diese durch bekannte konstruktive Massnahmen abgeschirmt werden.

In Anwendungsfällen, da das Gewicht einer Längsführung oder die bewegliche Masse ein wesentliches Kriterium darstellen, wirken sich die Vorteile der erfindungsgemässen Magnetführung besonders günstig aus. Im Gegensatz zu herkömmlichen Längsführungen muss der Schlitten seine Führung nicht allseitig umschliessen um auf dieser verschiebbar festgehalten zu werden, sondern es genügt, wenn er an zwei in einem Winkel zueinander stehende Flächen oder drei parallele Linien anliegen kann.

Diese Art der Längsführung wird erst möglich durch die Verfügbarkeit von neuen hochwertigen Permanentmagnet-Werkstoffen wie Kobalt-Seltene Erden, Samarium-Kobalt, Neodym-Eisen-Bor, und andere teils unter den Markennamen Vacodym, Vacomax, Recoma, Refema und andere von den Firmen VAC, Ugimag und Sumitomo hergestellten Produkte.

Im Folgenden wird die Erfindung im wesentlichen anhand zweier in der Zeichnung schematisch dargestellter Messinstrumente, das eine für vorwiegend vertikalen, das andere für vorwiegend horizontalen Einsatz, näher erläutert. In der Zeichnung zeigt

Fig. 1a einen Schnitt entlang der Schnittline A-A der Fig. 1b einer erfindungsgemässen Längsführung mit mittels eines Magnetlagers auf einer Säule positioniertem Schlitten,

Fig. 1b zeigt einen Teil der Säule nach Fig. 1a mit darauf aufgesetztem Schlitten,

Fig. 1c illustriert einen Teil der Säule nach Fig. 1a mit einem darauf aufgesetzten Schlitten, dessen magnetischer Kreis des Magnetlagers mit U-förmigen Magneten sowie Mitteln zur Einstellung eines Luftspaltes bestückt ist,

Fig. 2 zeigt schematisch ein Magnetlager mit offenem Magnetkreis,

Fig. 3 illustriert schematisch ein Magnetlager mit geschlossenem Magnetkreis,

Fig. 4 und 5 zeigen Beispiele von vorteilhaften Querschnittprofilen von erfindungsgemässen Längsführungen,

Fig. 6 zeigt eine vorteilhafte Ausführungsvariante einer Abstützung eines Schiebers auf einer Gleitfläche,

Fig. 7a und 7b veranschaulichen eine vorteilhafte Ausgestaltung einer erfindungsgemässen Längsführung, bei der die Magnetkraft der Magnetführung zumindest einen Teil des Gewichtes des beweglichen Schlittens kompensiert,

Fig. 8 illustriert eine Anwendung eines Magnetlagers als Drehanschlag,

Fig. 9a zeigt den Schieber einer Schiebelehre im Schnitt entlang der Schnittachse A-A der Fig. 9b,

Fig. 9b. zeigt einen Teil der Stange der Schiebelehre mit darauf aufgesetztem Schieber,

Fig. 10 zeigt das Kräfteverhältnis an der Stange und dem Schieber unter Betrachtung des Schiebers als starrer Körper,

Fig. 11 zeigt schematisch die Stange mit zwei Messschnäbeln und der an diesen angreifenden Messkraft,

Fig. 12 illustriert ein auf Biegung beanspruchtes trapezförmiges Profil einer Stange mit den daran angreifenden Kräften in Perspekitve,

Fig. 13a bis 13d illustrieren Beispiele von Stangenquerschnitten und vorteilhaften Anordnungen von Teilen des Magnetlagers darauf,

Fig. 14 zeigt, wie die auf eine Stange wirkenden Zugkräfte durch einen vorgespannten Stab aufgenommen werden können,

Fig. 15a und 15 b zeigen weitere vorteilhafte Stangenquerschnitte,

Fig. 16a und 16b illustrieren eine vorteilhafte Stange einer Schiebelehre im Querschnitt und in Draufsicht, und

Fig. 17 zeigt eine Antriebseinheit mit Motor für einen Schieber.

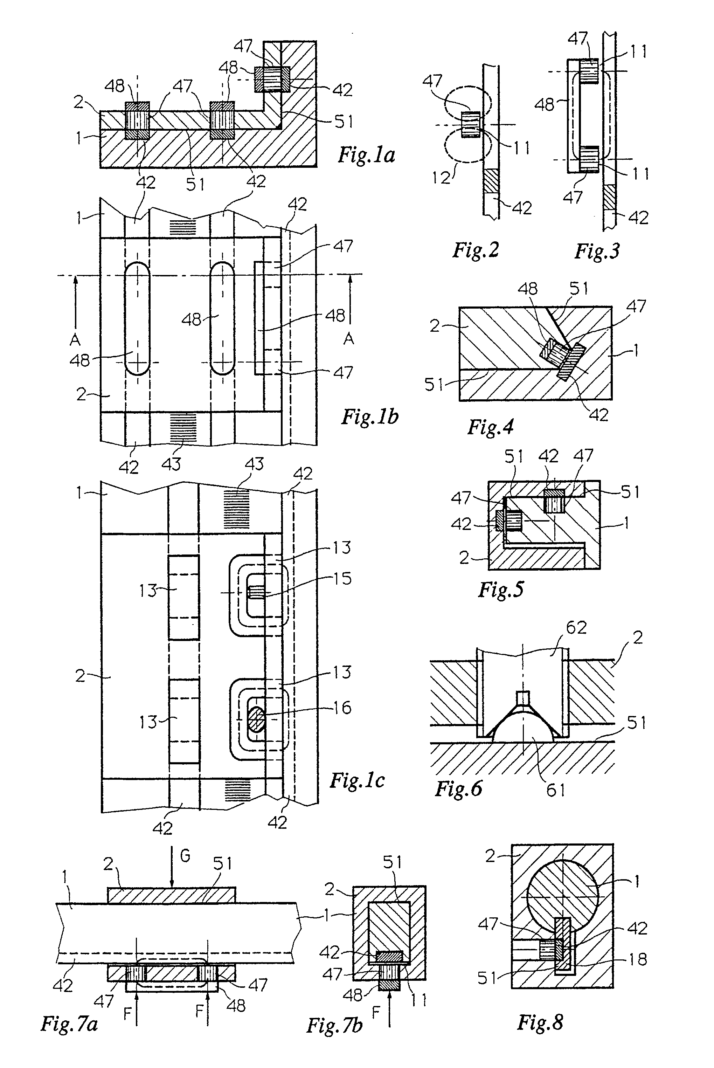

Fig. 1a zeigt einen Schnitt entlang der Schnittlinie A-A durch eine Säule 1, Schienen 42 aus weichmagnetischem Material und ein Schlitten 2 mit zylindrischen Permanentmagneten 47 und magnetischen Rückführungen 48.

Fig. 1b zeigt einen Teil der Säule 1 mit dem darauf aufgesetzten Schlitten 2, den zylindrischen Permanentmagneten 47 und den magnetischen Rückführungen 48.

Fig. 1c zeigt einen Teil der Säule 1 mit dem daruf aufgesetzten Schlitten 2, einer Variante des magnetischen Kreises mit U-förmigen Magneten 13 sowie Mitteln zur Einstellung der Luftspaltlänge 11, einmal mit einer Schraube 15 und einmal mit einem Exzenter 16.

Wie anhand dieser Figuren ersichtlich, ist der Schlitten 2 durch die im wesentlichen vertikal stehende Säule 1 geführt und kann sich in einem einzigen Freiheitsgrad, der Achse der Säule 1, hier als Z-Achse definiert, bewegen. Parallel mit der Säule 1 verläuft als Massverkörperung ein Masstab 43 der optisch, kapazitiv, induktiv oder anders abgetastet wird. Die Säule 1 enthält oder ist im Wesentlichen eine genaue lineare Führung, an die hohe Anforderungen an Geradheit und Biegesteifigkeit gestellt sind. Bei Anwendungen der Längsführung, bei denen die Masse möglichst gering gehalten werden muss, ist es wichtig, für die Säule 1 ein Material und einen Querschnitt zu wählen, die das beste Verhältnis von Gewicht und Biegesteifigkeit ergeben und eine genaue Führung ermöglichen. Auf Grund der vorher erläuterten Materialeigenschaften fällt die Wahl eindeutig auf einen keramischen Werkstoff.

Mit Rücksicht auf einfache Bearbeitbarkeit wurde in dem Beispiel für die Säule 1 ein L-Profil gewählt. Dieses kann vorteilhafterweise aus zwei Prismen mit rechteckigem Querschnitt, die nach der Bearbeitung der Gleitflächen zusammengeklebt und/oder verschraubt werden, bestehen. Im Gegensatz zu Gleitführungen nach dem Stand der Technik brauchen in der hier vorgeschlagenen Konstruktion nur zwei in einem Winkel zueinander zu stehen kommende Flächen plangeläppt zu werden. Die übrigen Prismenflächen können entweder roh belassen oder grob bearbeitet werden, da sie für die Qualität der Führung nicht relevant sind. Diese Tatsache hat einen wesentlichen Einfluss auf den Preis der Prismen aus Keramik, ist doch die Bearbeitung planparalleler Flächen und insbesondere solcher mit masshaltigem Abstand und/oder solcher mit konstantem Winkel zu einer dritten Fläche mit grossem Aufwand verbunden. Die beiden Prismen können vorteilhafterweise unter Zuhilfenahme einer Winkellehre zu der aus der Fig. 1a ersichtlichen Säule 1 verbunden werden, wobei eine Kleber- oder Kittschicht eventuelle Unebenheiten und/oder Winkelfehler ausgleichen kann. Dies entfällt bei einer monolithischen Ausführung

Parallel zur Längsachse der Säule 1 sind Zonen aus ferromagnetischem Material, vorzugsweise Weicheisen, in der Folge Schienen 42 genannt, angeordnet. Auf dem beweglichen Schlitten 2 sind Magnete 13, 47, vorteilhafterweise Permanentmagnete, die zusammen mit den Schienen 42 einen offenen oder geschlossenen magnetischen Kreis bilden, angeordnet. Die Kraft, mit welcher der Schlitten 2 auf die Führungsflächen 51 der Säule 1 gepresst wird, in der Folge Haftkraft genannt, ist in weiten Grenzen einstellbar, beispielsweise bei der Dimensionierung der Magnete 13, 47 oder durch Verändern des magnetischen Widerstandes, vorteilhafterweise der Länge des Luftspaltes 11. Die Kraft, die der Schlitten 2 einer Verschiebung in der Säulenachse entgegensetzt, ist gleich der Haftkraft multipliziert mit dem Reibungskoeffizienten der Führungsflächen 51 von Schlitten 2 und Säule 1. Sie soll einerseits im Stillstand möglichst hoch, und anderseits während der Verschiebung möglichst tief sein. Dies kann dadurch erreicht werden, dass im Stillstand zusätzliche Magnete, Permanentmagnete oder Elektromagnete eingeschaltet werden, dass während der Verschiebung der magnetische Widerstand erhöht wird, oder dass während der Verschiebung der Reibungskoeffizient verkleinert wird, beispielweise indem zwischen den Führungsflächen 51 ein statischer Luftdruck aufgebaut wird, sodass die Verschiebungskraft auf quasi Null absinken kann, während die Haftkraft voll wirksam bleibt.

Fig. 2 zeigt einen offenen Magnetkreis mit einem zylindrischen Magneten 47, der Schiene 42 aus Weicheisen, dem Luftspalt 11 und einem starken Streufeld 12.

Fig. 3 zeigt einen geschlossenen Magnetkreis mit zylindrischen Magneten 47, einer magnetischen Rückführung 48, den Luftspalten 11 und der Schiene 42 aus Weicheisen.

Fig. 4 und 5 zeigen Beispiele von vorteilhaften Querschnitten, wie sie für erfindungsgemässe Längsführungen verwendet werden können, mit Säule 1, Schlitten 2, Magneten 47, magnetischer Rückführung 48, Schiene 42 und den Gleitflächen 51.

Eine hochgenaue Führung mit guten Gleiteigenschaften und geringer Abnützung ist in Fig. 6 dargestellt. Eine abgeflachte Kugel 61, in einer Stellschraube 62 gehalten, stützt den Schlitten 2 auf der Gleitfläche 51 ab. Die Kugel besteht vorteilhafterweise aus Saphir, Rubin oder anderer Keramik, kann aber auch mit einer geeigneten Gleitschicht versehen sein.

Fig. 7 zeigt eine weitere Anwendung eines Magnetlagers, bei welcher die Magnetkraft F zur teilweisen oder ganzen Kompensation des Gewichtes G des beweglichen Schlittens 2 dient. Die durch das Magnetsystem, bestehend aus zylindrischen Magneten 47, magnetischer Rückführung 48 und Schiene 42 aus Weicheisen über den Luftspalt 11 erzeugte Kraft F ist der Gewichtskraft G entgegengesetzt und bewirkt eine Entlastung des Schlittens 2, sodass dieser im Extremfall gewichtslos auf seiner Führung schweben kann. Bei Überkompensation, wenn also F grösser ist als G, wird der Schlitten 2 an der unteren Kante der Führung anliegen. Die Kraft F kann auf einfache Weise durch Verändern des magnetischen Widerstandes, vorzugsweise der Luftspaltlänge 11, eingestellt werden.

Fig. 8 zeigt eine Anwendung des Magnetlagers als Drehanschlag oder Verdrehungsschutz mit einer runden Säule 1' mit darin eingelassenem prismatischem Körper 18 mit rechteckigem Querschnitt, den Gleitflächen 51 und dem Magnetsystem, bestehend aus zylindrischem Magnet 47 und Schiene 42, sowie dem Schlitten 2.

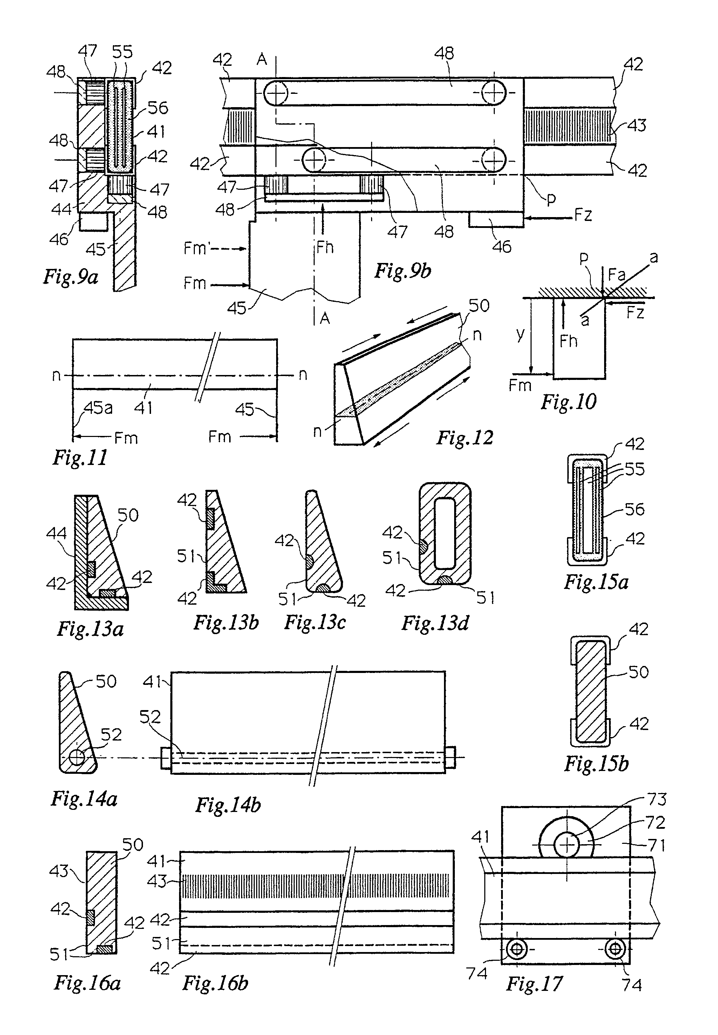

Anhand eines einer Schiebelehre ähnlichen Messinstrumentes wird in den Fig. 9a und 9b eine weitere Anwendung der erfindungsgemässen Linearführung erläutert. Dank der hohen Qualität der Längsführung wird es erstmals möglich, mit einem schiebelehrenähnlichen Instrument den Tausendstel-Millimeter zu erfassen. Die Führung ist vollkommen spielfrei, benötigt keine Einstellung, und bewirkt einen über ihre gesamte Länge konstanten Verschiebewiderstand.

Parallel zur Längsachse einer biegesteifen, mit Vorteil aus Keramik bestehenden oder zumindest einen Kern aus Keramik enthaltenden Stange 41 sind Schienen 42 aus ferromagnetischem Material angeordnet. Die Schienen 42 dienen in erster Linie als Teil eines magnetischen Kreises, können jedoch gleichzeitig die Funktion eines Kantenschutzes, einer Gleitfläche und einer zusätzlichen Versteifung übernehmen.

Demzufolge können sie so ausgeformt sein, dass sie nur eine, oder mehrere Flächen der prismatischen Stange 41 teilweise oder ganz umfassen. Zwei und nur zwei angrenzende, in einem Winkel zueinander stehende Prismenflächen sind mit hoher Genauigkeit bearbeitet und dienen als Führungsbahn. Auch hier entfällt die Bearbeitung von planparallelen und masshaltig zueinander verlaufender Flächen, was sich besonders günstig auf die wirtschaftliche Herstellung der Stange 41 auswirkt. Der Querschnitt der Stange 41 kann entsprechend dem Einsatzbereich des Instrumentes, dessen Gewicht, Biegesteifigkeit, Art der Werkstoffe, Beanspruchung im Betrieb, sowie der Verteilung von Zug- und Druckkräften in weiten Grenzen variieren. Auf diesen höchstens zwei Flächen stützt der in Richtung der Längsachse bewegliche Schieber 44 ab. Im Falle eines schiebelehrenähnlichen Messinstrumentes wird er einen Messchnabel 45 und/oder Einsätze zur Messung von Aussenund/oder Innendimensionen enthalten. Der Schieber 44 ist ausgerüstet mit einem System bestehend aus den weiter oben erwähnten Hochleistungsmagneten 47 und weiteren Elementen eines oder mehrerer Magnetkreise, die mit den auf die Stange 41 aufgebrachten Schienen 42 zusammenwirken. Die am Messchnabel 45 angreifende Messkraft Fm, zusammen mit der von Hand oder motorisch aufzubringenden Zustellkraft Fz bilden ein Kräftepaar, das auf den Schieber 44 ein Drehmoment ausübt, welches durch die Auflagekraft Fa der Lagerung und durch die Haftkraft Fh der Magnete 47 zumindest kompensiert werden muss. Darauf basierend kann die für eine bestimmte Messkraft Fm notwendige Haftkraft Fh oder die bei gegebener Haftkraft Fh mögliche Messkraft Fm leicht berechnet werden. Die Kräftevehältnisse sind eindeutig und übersichtlich bestimmt, der Verschiebewiderstand ist konstant und wird nicht bei Auftreten der Messkraft Fm unkontrollierbar erhöht oder durch Parallelitätsfehler beeinflusst, wie dies bei herkömmlichen Konstruktionen der Fall ist. Durch die Tatsache, dass die Haftkraft Fh in hohem Grade von der Luftspaltlänge abhängt, wird der Schieber 44 bei Ueberschreiten der zulässigen Messkraft Fm deutlich spürbar von der Führungsfläche abgekippt, wodurch eine Beschädigung des Instrumentes oder des Werkstückes oder eine Falschmessung vermieden werden kann. Mit bekannten Mitteln kann eine Begrenzung der Zustellkraft Fz und damit der Messkraft Fm vorgesehen werden. Um eine unbeabsichtigte vollständige Trennung des Schiebers 44 von der Führung zu verhindern, kann es zweckmässig sein, eine Sicherheitsbegrenzung mit genügend Spiel vorzusehen, die im normalen Betrieb keinen Einfluss auf die Führung ausüben kann. Bei dieser Anwendung geht es darum, den Verschiebewiderstand trotz einer hohen Haftkraft Fh möglichst tief zu halten. Dies kann erreicht werden durch den Einsatz von bekannten, mit PTFE behandelten oder legierten oder von keramischen Werkstoffen an den Gleitflächen. Es kann aber auch dadurch erreicht werden, dass ein statischer Luftdruck zwischen den Gleitflächen aufgebaut wird, welcher den Verschiebewiderstand teilweise oder ganz beseitigt unter Beibehaltung der vollen Haftkraft Fh. Im Zusammenhang mit schiebelehrenähnlichen Instrumenten wäre es zweckmässig, mit einem Zustellknopf 46 eine Pumpe zu betätigen, die während der Verschiebung und/oder während der Messung Luft in die Führung injiziert und so den Verschiebewiderstand momentan reduziert.

Fig. 10 zeigt das Kräfteverhältnis an Stange 41 und Schieber 44 unter Betrachtung des Schiebers 44 als starrer Körper. Der Verschiebewiderstand ist nicht eingezeichnet. Die Messkraft Fm kann in verschiedenen Abständen y von der Führung am Messchnabel 45 angreifen. Ihr steht die Zustellkraft Fz, bei Vernachlässigung des Verschiebewiderstandes von gleichem Betrag und mit umgekehrtem Vorzeichen, am Zustellknopf 46 angreifend, gegenüber. Dem durch dieses Kräftepaar verursachten Moment wirken die Auflagekraft Fa und die durch das Magnetsystem erzeugte Haftkraft Fh entgegen. Im Grenzfall, da die höchstzulässige Messkraft Fm erreicht ist, kommt die Resultierende der Kräfte Fm und Fh und die Resultierende der Kräfte Fa und Fz auf einer gemeinsamen Linie a-a, welche durch den Punkt P geht, zu liegen. Bei weiterer Erhöhung von Fm und Fz würde der Schieber 41 um einen Punkt P abkippen.

Fig. 11 zeigt schematisch die Stange 41 mit den beiden Messschnäbeln 45, 45a und der an diesen angreifenden Messkraft Fm.

Fig. 12 zeigt ein trapezförmiges Profil 50, das auf Biegung beansprucht wird, wobei die Zone oberhalb der neutralen Faser n-n auf Druck und die Zone unterhalb n-n auf Zug beansprucht wird. Bei keramischen Werkstoffen ist die zulässige Druckbeanspruch zehn mal höher als die zulässige Zugbeanspruchung. Bei der Auslegung des Profils 50 sollte diesem Umstand Rechnung getragen werden.

Fig.13a bis 13d zeigen einige vorteilhafte Beispiele von Querschnitten 50, wie sie für die Stange 41 eines Messinstrumentes verwendet werden können, mit den Schienen 42 verschieden angeordnet und mit verschiedenem Querschnitt derselben. Die Führungsbahnen 51 stehen in diesen Beispielen senkrecht zueinander. Fig. 13c und 13d zeigen keramikgerecht ausgelegte Querschnitte, bei denen alle Ecken abgerundet sind.

Fig. 14a und 14b zeigen, wie die Zugkräfte durch einen vorgespannten Stab 52 aufgenommen werden können. Keramische Werkstoffe sollten nicht auf Zug beansprucht werden, da stets vorhandenen Materialdefekte infolge ihrer Kerbwirkung zu einem Bruch führen können. In Folge praktisch völligen Fehlens von Plastizität, setzen Bruchvorgänge unmittelbar nach dem linear elastischen Spannungs-Dehnungsverhalten ein. Die Stange 41 ist in ihrer Längsrichtung mit einem Hohlraum versehen, in welchem ein Stab 52 aus einem Material, das hohe Zugkräfte aufnehmen kann, vorgespannt eingelegt ist.

Fig. 15a zeigt eine Stange 41 im Querschnitt, bei welcher Keramiklamellen 55 in einem Füllmaterial 56 eingebettet sind. Die Schienen 42 sind hier sowohl Teil des Magnetkreises wie auch Führung des Schiebers 44 und Kantenschutz. In Fig. 15b ist der gesamte Querschnitt 50 aus Keramik.

Fig. 16a zeigt die Stange 41 im Schnitt, fig. 16b in Seitenansicht. direkt auf der Stange 41 ist eine Massverkörperung 43 aufgebracht. Zwischen Schiene 42 und Massverkörperung 43 kann eine plangeläppte Führungsbahn 51 liegen. Im Falle einer Massverkörperung für kapazitive Ablesung kann diese aus einer direkt auf die Stange 41 aufgebrachten elektrisch leitenden Schicht mit entsprechender Massstabteilung bestehen. Auch für Massverkörperungen für optische Ablesungen eignet sich Keramik ausgezeichnet als Substrat.

Die Massverkörperung kann vorteilhafterweise direkt auf die Stange aufgebracht werden, derart, dass zumindest ein Teil der Keramikstange das Substrat bildet. Im Falle eines Massstabes für kapazitive Ablesung wird auf dieses Substrat vorteilhafterweise eine elektrisch leitende Schicht aufgebracht, die nachträglich geätzt oder graviert werden kann. Es ist auch denkbar, das Substrat direkt selektiv mit dem Massstabmuster zu beschichten, sodass eine Aetzung oder Gravur entfällt. Gleichzeitig können leitende Zonen für eine optimale elektrostatische Abschirmung aufgebracht werden. Das Keramik-Substrat hat den Vorteil, dass es zeitlich dimensionsstabil ist, keine Feuchtigkeit aufnimmt, günstige dielektrische Eigenschaften aufweist und sich dank seiner Oberflächenbeschaffenheit sehr gut für die Beschichtung mit leitenden Schichten eignet. Auf diese Weise lassen sich genauere und stabilere Massverkörperungen realisieren als dies mit den heute verwendeten Materialien der Fall ist. Die Integration der Massverkörperung in die Längsführung wirkt sich auf den Preis eines Gerätes günstig aus, da als Massstab nicht ein zusätzliches Bauteil hergestellt und montiert werden muss.

Die im Schieber eingebauten Komponenten des Magnetkreises können auf einfache Art wirkungsvoll gegen Verschmutzung, insbesondere durch Eisenpartikel, geschützt werden. Die am Stab verlaufenden Schienen jedoch sollten nicht permanent aufmagnetisiert werden können. Dies kann dadurch erreicht werden, dass ein Material mit geringer Koerzitivfeldstärke, also ein magnetisch weiches Material verwendet wird. Im Falle, da die Schiene gleichzeitig Kantenschutz und/oder Gleitfläche bildet, ist ein Kompromiss zwischen mechanischer und magnetischer Härte anzustreben.

In Fällen, da die Verwendung von Magneten nicht erwünscht oder nicht zulässig ist, kann für die Erzeugung der Haftkraft Fh eine federbelastete Rolle verwendet werden, die auf den Führungsflächen 51 gegenüberliegenden Flächen oder Linien abrollt.

Der Schieber kann bei Bedarf motorisch angetrieben werden. Insbesondere bei grossen Schiebelehren ergibt sich dadurch eine einfachere und bequemere Handhabung. Der Motor wird vorteilhafterweise auch die Messkraft dosieren und konstant halten, was sich günstig auf die Messgenauigkeit auswirkt. Fig. 17 zeigt eine Ausführungsvariante einer solchen Antriebseinheit bestehnd aus einer Grundplatte 71, einem Motor 72 mit einem Reibrad 73 und zwei Rollen 74.

Der Fachmann erkennt, dass durch die Tatsache, dass bei der erfindungsgemässen Längsführung nur zwei in einem Winkel zueinander stehende Flächen genau bearbeitet sein müssen, diese gegenüber herkömmlichen Längsführungen wesentlich genauer und einfacher hergestellt werden kann.

**Ansprüche**

1. Längsführung umfassend einen Stab (1, 41) mit in einem Winkel zueinander angeordneten Flächen mit Führungsbahnen (51) und einen darauf in Längsrichtung verschiebbaren Schieber (2, 44), dadurch gekennzeichnet, dass zumindest eine ferromagnetische Schiene (42) sich in Längsrichtung über den Stab (1, 41) erstreckt, wobei die Führungsbahnen (51) mit Teilen des Schiebers (2, 44) und die Schiene (42) mit auf dem Schieber (42) angeordneten Magneten (13, 47) zusammenwirken.

2. Längsführung nach Anspruch 1, dadurch gekennzeichnet, dass der Stab (1, 41) zumindest teilweise aus Keramik besteht.

3. Längsführung nach Anspruch 2, dadurch gekennzeichnet, dass der Schieber (2, 44) zumindest teilweise aus Keramik besteht.

4. Längsführung nach Anspruch 1 oder nach den Ansprüchen 2 und 3, dadurch gekennzeichnet, dass die Magnete (13, 47) Permanentmagnete sind.

5. Längsführung nach Anspruch 1, dadurch gekennzeichnet, dass zwischen den Führungsflächen (51) auf dem Stab (1, 41) und den damit zusammenwirkenden Teilen des Schiebers (2, 44) ein statischer Luftdruck erzeugbar ist.

6. Längsführung nach Anspruch 5, dadurch gekennzeichnet, dass der Luftdruck mittels eines Zustellknopfes (46) auf dem Schieber (44) erzeugbar ist.

7. Längsführung nach Anspruch 2, dadurch gekennzeichnet, dass der Stab (1, 41) das Substrat einer Massverkörperung (43) ist.

8. Längsführung nach Anspruch 2, dadurch gekennzeichnet, dass der Stab (1, 41) zumindest teilweise vorgespannt ist.

9. Längsführung nach Anspruch 2, dadurch gekennzeichnet, dass der Stab (1, 41) in Füllmaterial angeordnete Keramiklamellen enthält.

10. Längsführung nach Anspruch 1, dadurch gekennzeichnet, dass mit der Schiene (42) zusammenwirkende Magnete (13, 41) offene Magnetkreise bilden.

11. Längsführung nach Anspruch 1, dadurch gekennzeichnet, dass die mit einer Schiene (42) zusammenwirkenden Magnete (13, 47) mit einer magnetischen Rückführung (48) verbunden oder U-förmig sind und einen geschlossenen Magnetkreis bilden.

12. Längsführung nach Anspruch 1, dadurch gekennzeichnet, dass zwei Flächen Führungsbahnen (51) und Schienen (42) tragen und der Schieber (44) an zwei mit letzteren zusammenwirkenden Flächen Magnete (47) umfasst.

13. Längsführung nach Anspruch 1, dadurch gekennzeichnet, dass die Führungsbahnen (51) aus ferromagnetischem Material bestehen und als Schienen (42) dienen.

14. Längsführung nach Anspruch 1, dadurch gekennzeichnet, dass der Schieber (2, 44) mittels Motor auf dem Stab (1, 41) verschiebbar ist.

Fig.1a

Fig.1b

Fig.2

Fig.3

Fig.4

Fig.5

Fig.6

Fig.1c

Fig.7a

Fig.7b

Fig.8

Fig.9a

Fig.9b

Fig.10

Fig.11

Fig.12

Fig.13a

Fig.13b

Fig.13c

Fig.13d

Fig.15a

Fig.14a

Fig.14b

Fig.15b

Fig.16a

Fig.16b

Fig.17

**Europäisches Patentamt**

# EUROPÄISCHER RECHERCHENBERICHT

Nummer der Anmeldung

## EP 90 81 0679

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X,D,Y | CH-A-4 151 88 (MAX FEHR)<br>* Seite 1, Zeilen 35 - 63 * * Seite 2, Zeilen 5 - 19 @ Seite 2, Zeilen 31 - 39 @ Seite 2, Zeilen 49 - 53; Figuren 1-4, 8, 9, 11-15 * | 1,4,5, 10-13,2, 3,14 | F 16 C 29/02<br>H 02 N 15/00 |
| | — — — | | |
| Y,A | GB-A-2 133 930 (CANON)<br>* Seite 1, Zeilen 85 - 98 * * Seite 1, Zeile 118 - Seite 2, Zeile 33 * * Seite 2, Zeilen 70 - 90; Figuren 1-3 * | 2,3,5 | |
| | — — — | | |
| Y,A | US-A-4 505 464 (A.CHITAYAT)<br>* Spalte 4, Zeile 43 - Spalte 5, Zeile 48; Figur 3 * | 14,1 | |
| | — — — | | |
| X,Y | PATENT ABSTRACTS OF JAPAN vol. 10, no. 176 (M-491)(2232) 20 Juni 1986,<br>& JP-A-61 25742 (NTN TOYO BEARING) 04 Februar 1986,<br>* das ganze Dokument * | 1,4,5,10, 12,2, | |
| | — — — | | |
| Y,A | US-A-4 512 616 (SHIGEMI SUZUKI)<br>* Spalte 2, Zeilen 22 - 34 * * Spalte 2, Zeilen 43 - 53; Figuren 1, 2 * | 2,3,5 | |
| | — — — | | RECHERCHIERTE SACHGEBIETE (Int. Cl.5) |
| A | PATENT ABSTRACTS OF JAPAN vol. 12, no. 364 (M-747)(3211) 29 September 1988,<br>& JP-A-63 120046 (INOUE JAPAX RES INC) 24 Mai 1988,<br>* das ganze Dokument * | 9 | H 02 N<br>H 01 F<br>G 01 B<br>B 23 Q<br>F 16 C |
| | — — — | | |
| A | GB-A-2 167 863 (MITUTOYO MFG)<br>* Seite 1, Zeilen 70 - 94; Figur 1 * | 7 | |
| | — — — — — | | |

Der vorliegende Recherchenbericht wurde für alle Patentansprüche erstellt

| Recherchenort | Abschlußdatum der Recherche | Prüfer |
|---|---|---|
| Den Haag | 10 Dezember 90 | ZANICHELLI F. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument